# EUROPEAN PATENT APPLICATION

(11) **EP 3 351 666 A1**
(43) Date of publication of application: **25.07.2018**
(21) Application number: 17843513.7
(22) Date of filing: 21.08.2017
(51) Int. Cl.: D02J 1/18, D06M 10/00, D06M 10/02, D06M 11/34, D06M 15/55, D06M 101/40

(54) **METHOD FOR PRODUCING FIBRILLATED CARBON FIBER SHEET**

(30) Priority: 25.08.2016 JP 2016164727
(71) Applicant: Kurashiki Boseki Kabushiki Kaisha, Kurashiki-shi, Okayama 710-0054 (JP)
(72) Inventor: HORIMOTO, Wataru, Neyagawa-shi Osaka 572-0823 (JP); ITO, Masamichi, Neyagawa-shi Osaka 572-0823 (JP)
(74) Representative: Diehl & Partner GbR
(86) International application number: PCT/JP2017/029724
(87) International publication number: WO 2018/038033

(57) **Abstract**

A method for producing a carbon fiber opened sheet 8 is provided. The method includes performing a surface activation treatment on an unopened tow of carbon fibers (3a, 3b) to which a sizing agent has been applied, and opening the unopened tow of carbon fibers (3a, 3b) into a sheet. The opening process preferably uses at least one set of opening devices. The set of opening devices includes a holding shaft (4a-4d, 5a-5d) for bending and conveying the unopened tow of carbon fibers (3a, 3b), and an opening bar (6a-6c) that vibrates in the width direction of the unopened tow. A difference in height ΔH between the end of the holding shaft (4a-4d, 5a-5d) and the end of the opening bar (6a-6c) is preferably 5 to 30 mm. With this configuration, even if a sizing agent is applied to the unopened tow of carbon fibers, the filaments are easily separated from each other and the tow is easily opened. Thus, the carbon fiber opened sheet is less likely to have a defect.

## Description

### Technical Field

The present invention relates to a method for producing a carbon fiber opened sheet that is easily opened and has few defects.

### Background Art

Carbon fiber reinforced plastics (CFRP) and glass fiber reinforced plastics have the advantages of high strength and being lightweight, and therefore have been widely used in, e.g., various sporting goods such as golf club shafts and fishing rods, aircrafts, automobiles, or pressure vessels and are also expected to find future applications. The fiber reinforced plastics may be formed into a target molded product by general molding techniques, including, e.g., a contact molding method such as a hand lay-up method or a spray-up method, a filament winding (FW) method, a drawing method, and a continuous molding method such as a continuous laminating method. A matrix resin may be a thermosetting resin (e.g., an epoxy resin) or a thermoplastic resin (e.g., a polypropylene resin). In order to increase the affinity for the matrix resin, the surface of reinforcing fibers is treated with a sizing agent suitable for the matrix resin.

The following are examples of conventional technologies. In Patent Document 1, an unopened tow of carbon fibers treated with a sizing agent is opened while the tow is softened by heating. In Patent Document 2, a sizing agent having an acrylic group and an epoxy group is used for carbon fibers. In Patent Document 3, the surface of carbon fibers is oxidized with ozone before the application of a sizing agent.

### Prior Art Documents

### Patent Documents

Patent Document 1: JP H11(1999)-172562 A
Patent Document 2: JP 2000-355884 A
Patent Document 3: JP 2009-79344A

### Disclosure of Invention

### Problem to be Solved by the Invention

However, when the unopened tow of carbon fibers is treated with a sizing agent in the conventional technologies, the filaments in the tow are not easily separated from each other, making it difficult to open the tow. Thus, defects are likely to occur.

In order to solve the above conventional problems, the present invention provides a method for producing a carbon fiber opened sheet, which uses an unopened tow of carbon fibers treated with a sizing agent and still allows the filaments in the tow to be easily separated from each other and the tow to be easily opened, thus providing a carbon fiber opened sheet that is less likely to have a defect.

### Means for Solving Problem

A method for producing a carbon fiber opened sheet of the present invention includes performing a surface activation treatment on an unopened tow of carbon fibers to which a sizing agent is applied, and opening the unopened tow of carbon fibers into a sheet.

### Effects of the Invention

In the present invention, the unopened tow of carbon fibers to which the sizing agent is applied is subjected to a surface activation treatment. This allows the filaments in the tow to be easily separated from each other and the tow to be easily opened. Therefore, the present invention can provide a carbon fiber opened sheet that is less likely to have a defect. Specifically, the surface activation of the unopened tow leads to the activation of the sizing agent applied to the surface of the individual carbon fibers due to, e.g., oxidation, so that the filaments are easily separated from each other. Thus, the unopened tow is easily opened, which results in an opened sheet that is less likely to have a defect. Moreover, the surface activation enables the carbon fibers to have good wettability with the matrix resin, and thus can further improve the impregnation of the carbon fibers with the matrix resin.

### Brief Description of Drawings

[FIG. 1] FIG. 1 is a schematic cross-sectional view of a tow opening device of an embodiment of the present invention.
[FIG. 2] FIG. 2 is a schematic perspective view of the tow opening device.

### Description of the Invention

Generally, an unopened tow of carbon fibers (also referred to as an "unopened tow" in the following) is sold with a sizing agent applied to the individual carbon fibers to increase the affinity for a matrix resin. In the present invention, such a commercially available unopened tow of carbon fibers to which a sizing agent is applied is subjected to a surface activation treatment so that the filaments in the tow are easily separated from each other. Thus, the unopened tow is easily opened, which results in a carbon fiber opened sheet (also referred to as an "opened sheet" in the following) that is less likely to have a defect. Moreover, the surface activation enables the carbon fibers to have good wettability with the matrix resin, and thus can further improve the impregnation of the carbon fibers with the matrix resin.

In the present invention, the term "opening" means that a large number of carbon fibers in a tow are spread apart in the width direction and formed into a thin sheet shape or a tape shape. The thickness is preferably 0.02 to 0.4 mm, and more preferably 0.02 to 0.3 mm. The unopened tow of carbon fibers used in the present invention is preferably 3 to 60K, and more preferably 12 to 60K. The K value indicates 1000 filaments. A commercially available large tow (e.g., 50K for 50000 filaments) generally has a width of about 12 mm.

It is preferable that the opening process uses at least one set of opening devices to open the unopened tow of carbon fibers, and that the set of opening devices includes a holding shaft for bending and conveying the unopened tow of carbon fibers, and an opening bar that vibrates in a width direction of the unopened tow of carbon fibers. The unopened tow is shaken in the width direction by the opening bar while it is being held by the holding shaft. Therefore, the unopened tow is spread and opened in the width direction. The opening bar and the holding shaft preferably have a circular, elliptical, or oval cross section. Among them, the oval cross section is preferred. In particular, the cross section of the opening bar is preferably oval because its upper and lower surfaces may come into contact with the unopened tow. It is preferable that the opening process uses 2 to 4 sets of opening devices, each set including the opening bar and the holding shaft. With this configuration, the tow can be opened efficiently.

It is preferable that a plurality of the unopened tows of carbon fibers, each tow being wound on a bobbin, are fed through the holding shaft and the opening bar so that the unopened tows are shaken in the width direction, spread in the width direction, and opened to form a single opened sheet. Thus, a wide opened sheet can be efficiently produced from a plurality of unopened tows of carbon fibers.

A difference in height ΔH between the end of the opening bar and the end of the holding shaft for bending and conveying the unopened tow of carbon fibers in the opening process is preferably 5 to 30 mm, and more preferably 10 to 20 mm. The unopened tow of carbon fibers is bent by an amount corresponding to the difference in height ΔH as it passes through the holding shaft and the opening bar. Therefore, the unopened tow is easily brought into contact with the surface of the vibrating opening bar and opened. The difference in height ΔH may be large at the beginning and gradually become smaller. The operating amplitude of the opening bar is preferably 1 to 20 mm, and more preferably 2 to 10 mm. The operating frequency of the opening bar is preferably 10 to 100 Hz, and more preferably 20 to 50 Hz. With this configuration, the tow can be opened efficiently.

The width of the carbon fiber opened sheet is preferably 0.5 to 5.0 mm per 1000 fibers constituting the unopened tow. Specifically, when a large tow (e.g., 50K or 60K) is used, the opened sheet has a width of about 0.5 to 1.5 mm per 1000 fibers constituting the tow. When a regular tow (e.g., 12K or 15K) is used, the opened sheet has a width of about 1.5 to 5.0 mm per 1000 fibers constituting the tow. The larger the number of fibers in a tow, the more likely that the fibers will be twisted, and the tow will not be opened easily. Accordingly, the width of the opened sheet becomes narrower. In the method of the present invention, unopened tows available from carbon fiber manufacturers can be spread and formed into easy-to-use opened sheets, which are suitable for use in various molded products.

In many cases, a sizing agent with an affinity for the matrix resin is used. The present invention can use any type of sizing agent. A preferred sizing agent is an epoxy-based resin that is very versatile. The amount of the sizing agent applied is preferably 0.1 to 5.0% by weight, and more preferably 0.2 to 3.0% by weight.

It is preferable that the surface activation treatment is at least one selected from the group consisting of ozone oxidation in the presence of oxygen, ultraviolet irradiation at a wavelength of 400 nm or less, and plasma treatment. These surface treatments activate the sizing agent with high efficiency. Among them, the ozone oxidation can be performed in the presence of oxygen, but may also be performed by other methods.

Methods for generating ozone include, e.g., silent discharge, creeping discharge, ultraviolet irradiation, and electrolysis. In terms of efficiency, the silent discharge is mainly used to generate a large amount of ozone. At present, the silent discharge is most commonly used as a discharge type ozonizer. A dielectric (mainly glass or ceramics) layer is provided on one or both of a pair of parallel electrodes in the air. Then, a high AC voltage is applied between the electrodes so that silent discharge is generated. The ozone concentration is, e.g., 40000 ppm. The treatment time is preferably 2 to 30 minutes. The unopened tow of carbon fibers is oxidized in the presence of air.

Another example of the ozone oxidation is excimer lamp irradiation. An excimer lamp is a discharge lamp that emits light from excimer that is formed when rare gas atoms or a combination of rare gas atoms and halogen atoms are excited by dielectric barrier discharge (i.e., short time discharge), which occurs in large numbers. The typical radiation wavelength of the excimer lamp is, e.g., Ar2* (126 nm), Kr2* (146 nm), Xe2* (172 nm), KrCl* (222 nm), or XeCl* (308 nm). The excimer lamp has a double structure of inner and outer tubes made of quartz glass. A metal electrode is provided on the inner side of the inner tube, and a metal mesh electrode is provided on the outer side of the outer tube. The quartz glass tubes are filled with a discharge gas. When a high AC voltage is applied between the electrodes, thin wire-like discharge plasma (dielectric barrier discharge) occurs in large numbers between two dielectric materials. The discharge plasma contains high energy electrons and disappears instantly. The atoms of the discharge gas are excited by the discharge plasma and immediately brought into an excimer state. In the transition from the excimer state to the original state (ground state), a spectrum specific to the excimer is emitted (excimer emission). The emission spectrum can be set in accordance with the discharge gas to be filled. The preferable irradiation conditions vary depending on the wavelength. When the wavelength is 172 nm, the light intensity is, e.g., 5 to 6 mW/cm² and the irradiation time is preferably about 0.5 to 30 minutes. When the wavelength is 222 nm, the light intensity is, e.g., 40 to 60 mW/cm² and the irradiation time is preferably about 2 to 30 minutes. Moreover, if there is an air layer (gap) between the lamp and the object to be treated, oxygen in the air absorbs light energy at a wavelength of 172 nm, thereby producing ozone. Thus, oxidation is also caused by the ozone.

Examples of other surface activation treatments include low pressure mercury lamp irradiation and plasma irradiation. A low pressure mercury lamp (low pressure UV lamp) utilizes the emission of light by arc discharge in mercury vapor at a mercury pressure of 100 Pa or less during lighting of the lamp. The arc tube is filled with a rare gas such as an argon gas and mercury or its amalgam. The lamp may radiate ultraviolet light, e.g., at a wavelength of 185 nm or 254 nm. The light intensity is, e.g., 40 to 60 mW/cm². The irradiation time is preferably about 2 to 30 minutes.

Plasma is generally a state of matter in which molecules constituting a gas are partially or fully ionized and separated into cations and electrons that move freely. The plasma irradiation of carbon fibers using a plasma treatment apparatus may be performed under the following conditions. The amount of irradiation is preferably 1000 to 50000 W·min/m², which is expressed in watt density (W·min/m²). The processing speed (i.e., the moving speed of the object to be treated) in a nitrogen gas atmosphere or a mixed nitrogen and oxygen gas atmosphere is preferably 0.05 to 1 m/min.

The above treatments may be performed alone or in any combination. These treatments are able to activate the sizing agent on the surface of the fibers, facilitate the opening process, and further improve the impregnation of the fibers by enhancing the wettability with the matrix resin. More specifically, it is considered that the sizing agent is activated by, e.g., cleaving molecules of the sizing agent or forming a hydroxyl group, a carbonyl group, a carboxyl group, an ammonium group, or an intermediate or an analogous group of these groups in a transition state.

The matrix resin may be either a thermoplastic resin or a thermosetting resin. Examples of the thermoplastic resin include polyolefin resin such as polyethylene or polypropylene, nylon resin, polyester resin, polycarbonate resin, and polyether ether ketone resin, but the present invention is not limited thereto. Examples of the thermosetting resin include epoxy resin, unsaturated polyester resin, phenol resin, and melamine resin, but the present invention is not limited thereto.

It is preferable that the carbon fiber opened sheet is integrated with a reinforcing material to further maintain continuity in the width direction. In this case, the carbon fiber opened sheet may be reinforced in the following manner. For example, a glass fiber scrim, a polyolefin scrim (such as a polyethylene or polypropylene scrim), or a net may be melted and integrated with the opened sheet, so that they are bonded together. Alternatively, resin powder (such as epoxy resin powder) may be scattered over the opened sheet and then heated. With this configuration, the carbon fibers constituting the opened sheet are continuous in the width direction and will not be loosened. Thus, the carbon fiber opened sheet can have better handling properties as a sheet. The reinforcing material is preferably selected from resins with an affinity for the matrix resin.

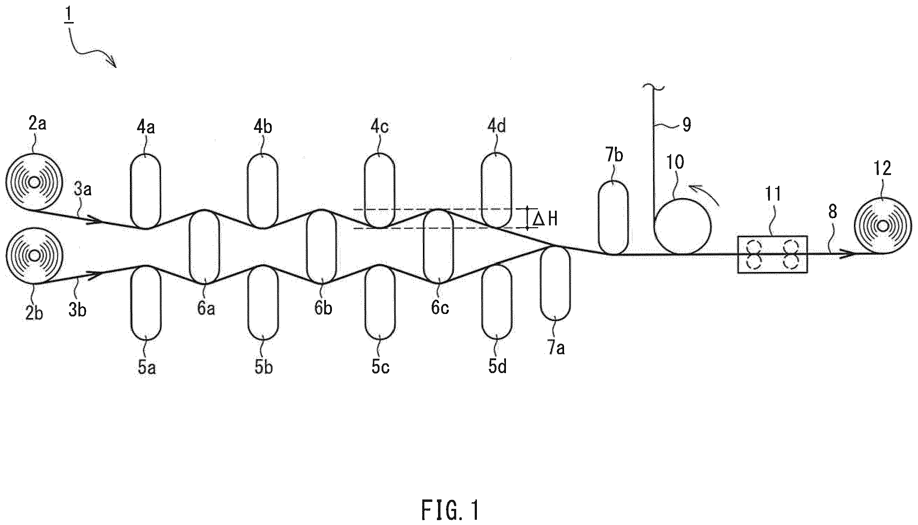

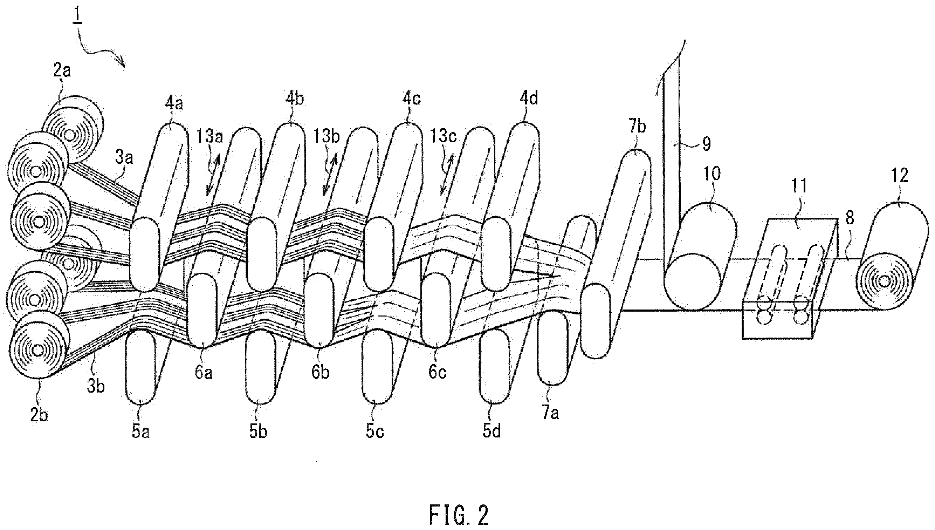

Next, the present invention will be described with reference to the drawings. In the following drawings, the same components are denoted by the same reference numerals. FIG. 1 is a schematic cross-sectional view of a tow opening device of an embodiment of the present invention. FIG. 2 is a schematic perspective view of the tow opening device. The main portion of a tow opening device 1 includes opening bars 6a, 6b, and 6c that vibrate in the width direction of a tow, and holding shafts 4a to 4d and 5a to 5d that hold the tow. A plurality of unopened tows 3a of carbon fibers are fed from feed bobbins 2a and pass through the holding shafts 4a to 4d and the opening bars 6a, 6b, and 6c while being bent between each of the holding shafts and the opening bars. The unopened tows 3a are shaken in the width direction by the opening bars 6a, 6b, and 6c in a state where they are held by the holding shafts 4a to 4d. Therefore, the unopened tows 3a are spread and opened in the width direction, providing an opened sheet. Similarly, a plurality of unopened tows 3b of carbon fibers are fed from feed bobbins 2b and pass through the holding shafts 5a to 5d and the opening bars 6a, 6b, and 6c while being bent between each of the holding shafts and the opening bars. The unopened tows 3b are shaken in the width direction by the opening bars 6a, 6b, and 6c in a state where they are held by the holding shafts 5a to 5d. Therefore, the unopened tows 3b are spread and opened in the width direction, providing an opened sheet. These opened sheets are aligned on a guide roll 7a to form a sheet-like material. After the sheet-like material passes through a guide roll 7b, a scrim 9 is supplied from a scrim supply roll 10. The sheet-like material and the scrim 9 are integrated in a heating unit 11. Then, a carbon fiber opened sheet 8 combined with the scrim 9 is taken up by a take-up bobbin 12. The carbon fiber opened sheet 8 thus obtained can be used as an integral sheet because the carbon fibers constituting the opened sheet 8 will not be loosened. In FIG. 2, the arrows 13a, 13b, and 13c indicate the directions of vibration of the opening bars 6a, 6b, and 6c, respectively.

The scrim 9 is a glass fiber sheet with a thickness of 0.25 mm and a mass per unit area of 15 g/m². The temperature in the heating unit 11 is 180°C and the residence time is 1.55 minutes. A thermoplastic resin is applied to the glass fibers. The thermoplastic resin may be, e.g., an ethylene-vinyl acetate copolymer. Other than the scrim 9, e.g., epoxy resin powder may be scattered over the sheet-like material, or a resin mesh may be bonded to the sheet-like material. With this configuration, the carbon fibers constituting the opened sheet 8 are continuous in the width direction and will not be loosened. Thus, the carbon fiber opened sheet 8 can be used as a sheet.

### Examples

Hereinafter, the present invention will be described in more detail by way of examples. However, the present invention is not limited to the following examples.

### (Example 1)

### (1) Unopened tow of carbon fiber

An unopened tow of carbon fibers manufactured by MITSUBISHI RAYON CO., LTD. was used (product number: PYROFILE TRH50 60M, form: large tow, filament count: 50K (50000 filaments, with a width of about 12 mm), filament diameter: 6 µm). An epoxy-based compound was applied to the carbon fibers in the unopened tow as a sizing agent.

### (2) Surface treatment of unopened tow of carbon fiber

Ozone oxidation of the unopened tow of carbon fibers was performed by placing the unopened tow in an enclosed space and exposing it to an ozone atmosphere. Specifically, the unopened tow was placed in an airtight container and oxidized with ozone at room temperature of 25°C for 30 minutes. In this case, oxygen was supplied from an oxygen cylinder to the container, and ozone was generated by using three ozone generators. The total amount of ozone generated by the ozone generators was about 6 g/h, since each unit had the ability to generate ozone in an amount of 2.16 g/h (voltage: 100 V, oxygen gas concentration: 90%, flow rate: 1 L/min). The ozone generators were manufactured by REGAL JOINT CO., LTD. (model number: ORZ-3.2, generation process: silent discharge, ozone concentration: 40000 ppm).

### (3) Means for opening unopened tow

The unopened tow was opened by using the tow opening device as illustrated in FIG. 1. The unopened tow of carbon fibers described in (1) was fed from each of six feed bobbins. The difference in height ΔH between the end of an opening bar and the end of a holding shaft was set to 10 mm. The opening bars vibrated at an amplitude of 6 mm and a frequency of 30 Hz. The take-up speed of the carbon fiber opened sheet was 20 m/min. In this manner, the carbon fiber opened sheet with an opening width of 35 mm/50K and a thickness of 0.2 mm was taken up. Each of the unopened tows on the six feed bobbins had a filament count of 50K. The width of the resulting carbon fiber opened sheet was approximately 6 times as large as the width obtained from the 50K unopened tow.

### (4) Evaluation of opened sheet

The carbon fiber opened sheet thus obtained was visually observed to check for fuzzing and was evaluated based on the following evaluation criteria.
A: Almost no fuzzing was observed.
B: Considerable fuzzing was observed.

Table 1 shows the results.

### (Comparative Examples 1 to 2)

In Comparative Examples 1 to 2, unopened tows of carbon fibers were opened without applying a surface treatment.

**[TABLE 1]**

| | Tension between bobbins (bar) | Difference in height ΔH (mm) | Take-up speed (m/min) | Opening width (mm/50K) | Fuzzing |
|---|---|---|---|---|---|
| Example 1 | 2 | 10 | 20 | 35 | A |
| Comparative Example 1 | 2 | 10 | 20 | 20 | A |
| Comparative Example 2 | 2 | 30 | 20 | 35 | B |

As can be seen from Table 1, the carbon fiber opened sheet in Example 1 had superior properties with few defects and little fuzzing.

### Industrial Applicability

The carbon fiber opened sheet of the present invention can be widely applied to, e.g., blades for wind power generation, various sporting goods such as golf club shafts and fishing rods, aircrafts, automobiles, or pressure vessels.

### Description of Reference Numerals

- 1: Tow opening device
- 2a, 2b: Feed bobbin
- 3a, 3b: Unopened tow of carbon fibers
- 4a to 4d, 5a to 5d: Holding shaft
- 6a, 6b, 6c: Opening bar
- 7a, 7b: Guide roll
- 8: Carbon fiber opened sheet
- 9: Scrim
- 10: Scrim supply roll
- 11: Heating unit
- 12: Take-up bobbin

## Claims

1. A method for producing a carbon fiber opened sheet, comprising:
performing a surface activation treatment on an unopened tow of carbon fibers to which a sizing agent is applied; and
opening the unopened tow of carbon fibers into a sheet.

2. The method according to claim 1, wherein the opening process uses at least one set of opening devices to open the unopened tow of carbon fibers, and the set of opening devices includes a holding shaft for bending and conveying the unopened tow of carbon fibers, and an opening bar that vibrates in a width direction of the unopened tow of carbon fibers.

3. The method according to claim 1 or 2, wherein a plurality of the unopened tows of carbon fibers, each tow being wound on a bobbin, are fed through the holding shaft and the opening bar so that the unopened tows are shaken in the width direction, spread in the width direction, and opened to form a single opened sheet.

4. The method according to any one of claims 1 to 3, wherein a difference in height ΔH between an end of the opening bar and an end of the holding shaft for bending and conveying the unopened tow of carbon fibers in the opening process is 5 to 30 mm.

5. The method according to any one of claims 1 to 4, wherein a width of the carbon fiber opened sheet is 0.5 to 5.0 mm per 1000 fibers constituting the unopened tow.

6. The method according to any one of claims 1 to 5, wherein the sizing agent is made of an epoxy-based resin.

7. The method according to any one of claims 1 to 6, wherein the surface activation treatment is at least one selected from the group consisting of ozone oxidation, ultraviolet irradiation at a wavelength of 400 nm or less, and plasma treatment.

8. The method according to any one of claims 1 to 7, further comprising:
bonding a reinforcing material to the carbon fiber opened sheet to maintain continuity in the width direction; and
integrating the carbon fiber opened sheet with the reinforcing material by heating.

9. The method according to any one of claims 1 to 8, wherein the reinforcing material is a scrim.
